# EUROPÄISCHE PATENTSCHRIFT

(11) **EP 1 629 287 B1**
(45) Veröffentlichungstag und Bekanntmachung des Hinweises auf die Patenterteilung: **06.10.2010**
(21) Anmeldenummer: 04738561.2
(22) Anmeldetag: 26.05.2004
(51) Int. Cl.: G01P 5/10

(54) **THERMISCHES ANEMOMETER**
THERMAL ANEMOMETER
ANEMOMETRE THERMIQUE

(30) Priorität: 30.05.2003 DE 10324727
(43) Veröffentlichungstag der Anmeldung: 01.03.2006
(73) Patentinhaber: INSTITUT FÜR LUFT- UND KÄLTETECHNIK GEMEINNÜTZIGE GESELLSCHAFT mbH, 01309 Dresden (DE)
(72) Erfinder: KRAUSE, Ralph, 01328 Dresden (DE); DÖGE, Klaus, 01279 Dresden (DE); FRANZKE, Uwe, 01768 Reinhardtsgrimma/OT Hausdorf (DE)
(74) Vertreter: Kaufmann, Sigfrid
(86) Internationale Anmeldenummer: PCT/DE2004/001092
(87) Internationale Veröffentlichungsnummer: WO 2004/109298

(56) Entgegenhaltungen:
- DE-A- 4 414 383
- DE-U- 20 308 517

## Beschreibung

Die Erfindung betrifft einen Strömungssensor, speziell ein thermisches Anemometer auf Durchflußbasis. Bei einem thermischen Anemometer besteht das Meßprinzip im Wärmeverlust beheizter Körper zum umgebenden Fluid. Dabei werden zwischen Constant-Current-Anemometer (CCA) und Constant-Temperature-Anemometer (CTA) unterschieden.

In der Klimatechnik ist neben anderen Größen die Kenntnis der Raumströmung in Bezug auf die mittlere Geschwindigkeit, die Richtung und den Turbulenzgrad im Aufenthaltsbereich von Personen unentbehrlich. Besonders dem Turbulenzgrad kommt hierbei eine entscheidende Rolle zu.

Deshalb wurde in der Industrienorm DIN 1946 Teil 2 "Raumlufttechnik - Gesundheitstechnische Anforderungen" der Turbulenzgrad als eine wesentliche Einflußgröße auf das thermische Behaglichkeitsempfinden eingeführt.

Ausgehend von der DIN 1946 sind die Grenzwerte der mittleren Raumluftgeschwindigkeit im Behaglichkeitsbereich nur von der Lufttemperatur und vom Turbulenzgrad abhängig. Je größer der Turbulenzgrad ist, um so kleiner muß die mittlere Raumluftgeschwindigkeit sein.

Weitere wesentliche Einflußparameter auf die thermische Behaglichkeit, wie beispielgebend die Richtung, sowohl der mittleren Luftgeschwindigkeit als auch die der Schwankungsgeschwindigkeit, die Luftfeuchtigkeit und die Wärmestrahlung, bleiben in der aktuellen Fassung der DIN 1946 unberücksichtigt.

Die Normen DIN 1946, Teil 2, VDI-2080, EN 27726, EN 13182 verdeutlichen die Problematik der Bestimmung der Raumluftströmungen. Die aufgeführten Normen zeigen in speziellen Punkten wenig Übereinstimmung. In einigen Punkten gibt es Widersprüche.

Handelsübliche Luft-Geschwindigkeitssensoren für die Klimatechnik liefern keine zuverlässige Bestimmung der Raumluftströmung, auch wenn diese Sensoren formal den technischen Anforderungen der entsprechenden Norm entsprechen.

Der Turbulenzgrad ist laut Norm definiert als Quotient aus der Varianz der Geschwindigkeit im Zähler und dem Mittelwert der Geschwindigkeit im Nenner. Die Besonderheit der Raumluftströmung besteht darin, daß sie, verglichen mit vielen anderen Strömungsformen, sehr große Turbulenzgrade aufweist. Die Luftgeschwindigkeit liegt im allgemeinen in einem Bereich von v= 0,05...0,3 m/s mit einem Turbulenzgrad Tᵤ im Bereich von 5 bis > 100%. Aus der Definition von Tᵤ als σ(v) / µ(v) ergibt sich bei kleinen Strömungsgeschwindigkeitswerten, also einem daraus folgenden kleinen Mittelwert der Geschwindigkeit, aufgrund des kleinen Nenners zwangsläufig ein hoher Turbulenzgrad.

Die thermische Trägheit der bestehenden Meßsonden hat zur Folge, daß hohe Schwankungsgeschwindigkeiten nicht mehr erfaßt werden können. Es besteht die Gefahr, den Turbulenzgrad und die mittlere Geschwindigkeit falsch zu bestimmen. Im weiteren kommt es bei den in der Raumströmung typischen kleinen mittleren Geschwindigkeiten und hohen Turbulenzgraden zu einer Umkehr der Strömungsrichtung im Bereich der Sensoren. Da die Sensoren im allgemeinen richtungsunabhängig arbeiten, kann diese Richtungsumkehr eine Fehlinterpretation des Meßsignals erzeugen. Der Wärmeübergang an der Oberfläche des Strömungssensors korreliert dann nicht mehr mit der mittleren Strömungsgeschwindigkeit des Fluids, und führt somit zu fehlerbehafteten Meßergebnissen. Turbulenzfreie beziehungsweise turbulenzarme Strömungszustände stellen in der Praxis eher die Ausnahme dar.

In DE 44 14 383 A wird ein Anemometer (bzw. ein Strömungssensor) beschrieben, das im Wesentlichen aus einem Sondenkörper besteht, in dem mehrere winklig zueinander beabstandete Durchströmungskanäle ausgebildet sind. Zur Messung der Strömungsgeschwindigkeit und -richtung ist in einem mittleren Abschnitt eines jeden Strömungskanals ein Strömungsfühler angeordnet. Hierbei ist die Länge der Durchströmungskanäle im Verhältnis zur mittleren Durchmesser um ein Vielfaches größer, womit erreicht wird, dass der Strömungsfühler zwar für das Fluid zugänglich ist, jedoch vor störenden Einflüssen wie Sonneinstrahlung, Spritzwasser und Verschmutzung geschützt ist.

Das Anemometer verfügt jedoch über keine Vorrichtungen zur Lagebestimmung im Raum. Außerdem bildet der Sondenkörper mit den darin eingebrachten Durchströmungskanälen eine Einheit, so dass die Strömungsfühler nur mit großem Aufwand ausgetauscht werden können.

Es ist die Aufgabe der Erfindung, einen Strömungssensor zu schaffen, welcher insbesondere die Anforderungen DIN 1946.2 erfüllt und insbesondere die Messung der mittleren Geschwindigkeit, der Strömungsrichtung und des Turbulenzgrades gestattet, wobei die Strömungsfühler einfach austauschbar sein sollen.

Diese Aufgabe wird erfindungsgemäß durch die kennzeichnenden Merkmale des Hauptanspruches gelöst, welcher auf eine Messung im dreidimensionalen Bereich Bezug nimmt. Der Gedanke der Erfindung wird analog auf die Messung im ebenen Bereich übertragen. Weitere vorteilhafte Ausführungen ergeben sich aus den nachfolgenden Ansprüchen. Ein Strömungssensor gemäß der Erfindung erfüllt insbesondere die Anforderungen DIN 1946.2 und unterstützt als geeigneter Strömungssensor bei fachbezogenen nationalen und internationalen Industrienormen zu einer weiteren Klarifizierung dieser Normen beizutragen.

Im folgenden wird auf die Anordnung für Meßsonden und Durchströmungskanäle für ein thermisches Anemometer auf Durchflußbasis für eine Ausprägung für eine dreidimensionale Messung nach Anspruch 1 Bezug genommen. Eine Anordnung für eine zweidimensionale Messung basiert analog auf den gleichen erfinderischen Gedanken und schließt diese Meßanordnung mit ein. Diese Anordnung liegt in einem als Hohlkörper ausgebildeten Sensorkopf. Die Signale der Strömungsfühler sind in einer Auswerte- und Anzeigeeinrichtung verarbeitbar, beispielgebend einem Mikrocomputer in der Form eines Notebooks oder Handheld-PC. Die Auswerte- und Anzeigeeinrichtung ist vorzugsweise mit einem benutzerfreundlichen Dialogsystem gestaltet.

Ein Meßsondentragkörper dient zur Aufnahme von mindestens sechs Strömungsfühlern. Jeder dieser Strömungsfühler wird jeweils von einem zugehörigen Paar von Durchströmungskänalen durchströmt. Die Durchströmungskanäle sind mit Öffnungen des Sensorkopfes verbunden. Das Paar von zugehörigen Durchströmungskanälen verläuft dabei vom zugeordneten Strömungsfühler zu den Öffnungen im Sensorkopf, die zentrisch gegenüberliegend auf dem Sensorkopf angeordnet sind. Damit wird ein Durchfluß des zu messenden Fluids durch den zugeordneten Strömungsfühler ermöglicht. Dabei sind alle Öffnungen räumlich gleichmäßig über den Sensorkopf angeordnet. Einem weiteren Gedanken der Erfindung folgend sind die Durchströmungskanäle formstabil und verwindungssteif. Sie sind mit dem ebenfalls formstabilen, verwindungssteifen Meßsondentragkörper verbunden und bilden so eine formstabile, verwindungssteife Apparate-Einheit.

Die Durchströmungskanäle liegen an ihrem äußeren axialen Ende an den Öffnungen des Sensorkopfes an und sind gemäß der Erfindung durch Halterungsnippel mit dem Sondenkörper festsitzend, lösbar verbunden, wobei die Halterungsnippel von der Außenseite des Sondenkörpers angebracht werden. Die Halterungsnippel greifen dabei durch die Öffnungen und gehen mit den Durchströmungskanälen eine festsitzende, lösbare Verbindung ein.

Gemäß der Erfindung wird ein rechentechnisches Verfahren verwendet, welches eine dreidimensionale, zeitabhängige Messung von Betrag und Richtung der Geschwindigkeit und insbesondere des Turbulenzgrades einer Strömung ermöglicht. Die obere Grenzfrequenz der Signalwandler ist dabei um ein Vielfaches größer als die maximal zu erwartende Frequenz der Geschwindigkeitsschwankung.

Der Strömungssensor nach der Erfindung ist in der Lage, die in der DIN 1946 Teil 2 "Raumlufttechnik - Gesundheitstechnische Anforderungen" definierten Größen, insbesondere den Turbulenzgrad und die mittlere Geschwindigkeit zu bestimmen. Hinzu kommt die ausschlaggebende Neuerung, daß der momentane Geschwindigkeitsvektor mit einer sehr hohen zeitlichen Auflösung im dreidimensionalen Raum mit einer hohen Genauigkeit und Zuverlässigkeit erfaßt werden kann.

Im folgenden wird ein Ausführungsbeispiel der Erfindung anhand der beigefügten Zeichnungen näher erläutert.

Es zeigt:
Fig. 1 Draufsicht auf die Anordnung für Strömungsfühler und Durchströmungskanäle für ein thermisches Anemometer auf Durchflußbasis gemäß der Erfindung
Fig. 2 Schemadarstellung der Montage der Anordnung für Strömungsfühler und Durchströmungskanäle für ein thermisches Anemometer auf Durchflußbasis gemäß der Erfindung nach Anspruch 3.

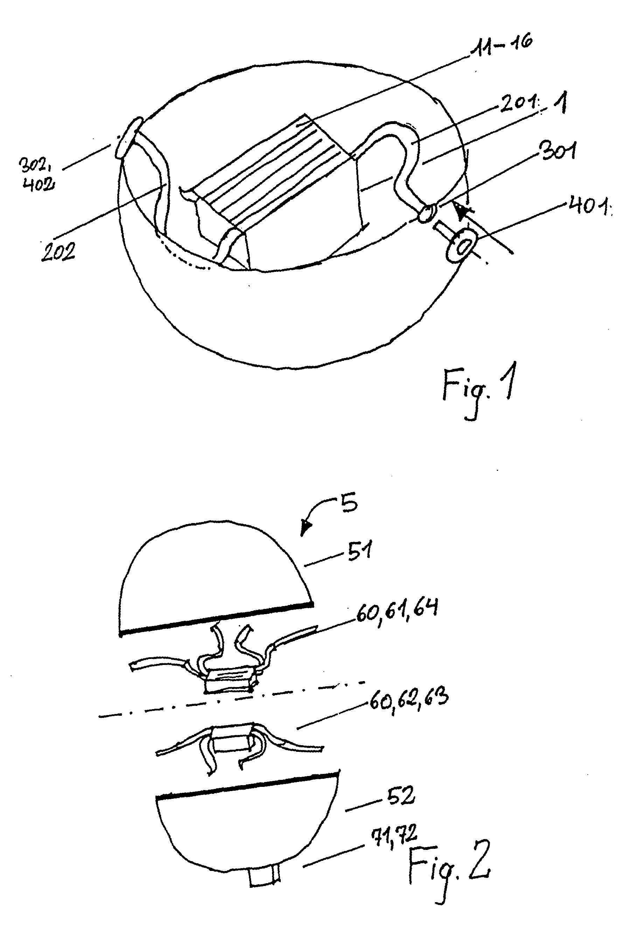

Zunächst wird auf Figur 1 Bezug genommen.
Im folgenden wird auf eine Anordnung für Meßsonden und Durchströmungskanäle für ein thermisches Anemometer auf Durchflußbasis für eine Ausprägung für eine dreidimensionale Messung nach Anspruch 1 Bezug genommen.
Eine Anordnung für eine zweidimensionale Messung basiert analog auf den gleichen erfinderischen Gedanken.

Diese Anordnung liegt in einem als Hohlkörper ausgebildeten Sensorkopf 5. Ein Meßsondentragkörper 1 dient zur Aufnahme von (mindestens) sechs Strömungsfühlern 11 bis 16. Der Strömungsfühler 11 besitzt thermoresistive Folien, die auf einem Dickfilm aus einem dielektrischen Werkstoff aufgetragen sind. Diese sind auf einen Siliziumchip gespannt. Der Strömungsfühler 11 besitzt eine Erkennung der Durchströmungsrichtung und unterscheidet positive und negative Druckdifferenzen.

Jeder dieser Strömungsfühler 11 wird jeweils von einem zusammengehörenden Paar von Durchströmungskänalen 201 bis 212 durchströmt. Die Durchströmungskanäle 201 bis 212 sind mit Öffnungen 301 bis 312 des Sensorkopfes verbunden. Ein Paar von zusammengehörenden Durchströmungskanälen 210, 211 verlaufen dabei vom zugeordneten Strömungsfühler 310 zu den Öffnungen 301, 302 im Sensorkopf, die zentrisch gegenüberliegend auf dem Sensorkopf 5 angeordnet sind. Damit wird ein Durchfluß des zu messenden Fluids durch den zugeordneten Strömungsfühler 301 ermöglicht. Dabei sind alle Öffnungen 301 bis 312 räumlich gleichmäßig über den Sensorkopf angeordnet. Es ergeben sich zwölf, in der Form und Länge verschiedene Arten von Durchströmungskanälen 201 bis 212. Diese unterschiedliche Form und Länge der Durchströmungskanäle 201 macht beim Umwandeln der Signale der Strömungsfühler 11 zu Strömungsergebnissen die Verwendung von Kalibrierungsfunktionen notwendig. Jedem Strömungsmeßfühler 11 bis 16 ist eine eigens konfigurierte Kalibrierungsfunktion zugeordnet.

Die Durchströmungskanäle 201 bis 212 sind formstabil und verwindungssteif und sind mit dem ebenfalls formstabilen, verwindungssteifen Meßsondentragkörper 1 verbunden, und bilden so eine formstabile, verwindungssteife Apparate-Einheit 60.

Die Durchströmungskanäle 201 liegen an ihrem äußeren axialen Ende an den Öffnungen 301 des Sensorkopfes 5 an und sind gemäß der Erfindung durch Halterungsnippel 401 bis 412 mit dem Sensorkopf 5 festsitzend, lösbar verbunden, wobei die Halterungsnippel 401 von der Außenseite des Sensorkopfes 5 angebracht werden. Die Halterungsnippel 401 greifen dabei durch die Öffnungen 301 und gehen mit den Durchströmungskanälen 201 eine festsitzende, lösbare Verbindung ein.

Die Halterungsnippel 401 sind dabei austauschbar. Verschiedene Arten von Halterungsnippeln 401 können verwendet werden, um eine Anpassung an verschiedene Meßbereiche vorzunehmen. Mit Vorzug wird die Art der verwendeten Halterungsnippel 401 in die Steuereinheit eingegeben - sofern keine automatische Erkennung vorliegt - und es wird im folgenden ein entsprechend für diese Halterungsnippel 401 konfigurierter Berechnungsalgorithmus zum Umwandeln der Signale der Meßsonden in Strömungsmeßwerte verwendet.

Zur Dokumentation und für eine weitere Leistungsfähigkeit der Anordnung ist diese mit Mitteln zur Lagebestimmung im Raum versehen. Diese sind im ersten Fall als Neigungssensor 71 ausgeprägt. Mit einem mikromechanischen Meßelement wird die Neigung gemessen und an die Steuereinheit weitergeleitet, wobei im folgenden beim Umwandeln der Signale der Strömungsfühler 11 in Strömungsmeßwerte ein zum Ausgleich der Neigung konfigurierter Berechnungsalgorithmus verwendet wird. Mit diesem Mittel kann die Messung der Strömung über einer Tischplatte oder - beispielgebend im allgemein sehr unzugänglichen Fertigungsbereich - vorgenommen werden, wobei die Anordnung auf einem geknickt, geneigten Stativ angeordnet ist und diese Neigung automatisch in den Strömungsmessungen rechentechnisch kompensiert wird.

Für die Dokumentation der Meßergebnisse sind weitere Erhebungsdaten sinnvoll und notwendig, z.B. die genaue Lage der Anordnung im Meßbereich, also beispielgebend der Abstand zum Boden, der Wand oder der Decke. Ein Distanzsensor 72 stellt diese Daten bereit, gibt diese an die Steuereinheit weiter und macht sie so weiter verarbeitbar.

Im weiteren ist ein Signalgeber zur Lagebestimmung im Raum integriert. Dieser Signalgeber besteht aus mehreren Laserpointern 73, welche die Lage im Raum optisch durch die erzeugten Lichtpunkte anzeigen und verarbeitbar machen.
Überdies ist die Anordnung mit weiteren Sensoren zur Bestimmung der Stoffwerte ausgestattet. Beispielgebend werden Druck-, Temperatur- und Feuchtigkeitssensoren integriert.

Gemäß der Erfindung wird ein rechentechnisches Verfahren verwendet, welches eine dreidimensionale, zeitabhängige Messung von Betrag und Richtung der Geschwindigkeit und insbesondere des Turbulenzgrades einer Strömung ermöglicht. Der Turbulenzgrad ist der Quotient aus der Varianz und dem Mittelwert der Strömungsgeschwindigkeit. Die obere Grenzfrequenz der Strömungsfühler 11 ist dabei um ein Vielfaches höher als die maximal zu erwartende Frequenz der Geschwindigkeitsschwankungen.

Für die Bestimmung von turbulenten Strömungen oder von instationären Strömungsvorgängen besteht ein Teil des verwendeten Algorithmus in der Bestimmung der statistischen Charakteristiken der Geschwindigkeitsfluktuationen und der spektralen Kenngrößen. Dazu gehören unter anderem Mittelwert, Varianz, Korrelation, Amplitudenverteilung und das Frequenzspektrum.

Infolge der nichtlinearen Übertragungsfunktion des Meßumformers lassen sich die statistischen Charakteristiken nicht direkt aus der Meßsignalspannung berechnen. Es erfolgt deshalb zuerst eine Linearisierung des Meßsignals über eine Kalibrierfunktion. Weiterhin hat die Kalibrierfunktion die Aufgabe, den Einfluß von Stoffwerten auf das Meßsignal zu korrigieren. Die Kalibrierfunktionen werden im Zuge der Auslegung der Meßanordnung für jeden Strömungskanal errechnet und getrennt abgelegt, so daß sowohl Fertigungstoleranzen als auch Abweichungen der Kennlinien der Meßumformer voneinander berücksichtigt werden können. Für das linearisierte Ausgangssignal wird damit eine sehr gute Genauigkeit garantiert. Für die Signalanalyse werden die folgenden statistischen Größen berechnet:
Mittelwert, Varianz, Schiefe, Kurtosis. In der Turbulenzbetrachtung gibt das Spektrum Aufschluß über die Energieübertragung zwischen Wirbeln verschiedener Größe.

Im weiteren wird auf Figur 2 Bezug genommen. Auch diese Figur zeigt die Ausprägung der Erfindung für eine dreidimensionale Messung nach Anspruch 1.
Figur 2 zeigt die Aufteilung einer Apparate-Einheit 60, aufgeteilt in eine obere Hälfte der Apparate-Einheit 61 und eine untere Hälfte der Apparate-Einheit 62. Die untere Hälfte 62 der Apparate-Einheit besteht aus dem Meßsondentragkörper 1 und den sechs darin angeordneten Strömungsfühlem 11 bis 16 und den der unteren Hälfte zugehörigen Durchströmungskanäle 201. Die der unteren Hälfte zugeordneten Halterungsnippel 401 bis 416 greifen durch die Öffnungen 301 des Sensorkopfes 52 von außen durch und fixieren die Durchströmungskanäle 201 gegen die Halbschale des Sensorkopfes 52. Die Durchströmungskanäle 201 und der Meßsondentragkörper 1 sind formstabil und verwindungssteif, so daß mit der Fixierung der Haltenippel 401 von außen diese Apparate-Einheit 62 festsitzend, lösbar mit der unteren Halbschale des Sensorkopfes 52 verbunden ist.

Die Steckverbindung der unteren Apparate-Einheit 62 zur oberen Apparate-Einheit 61, insbesondere die Übergänge der Durchströmungskanäle 63 und die Übergänge zu den Strömungsfühlern 64 sind hochpräzise formgenau, abdichtend, gratfrei gestaltet. Nachdem die obere Apparate-Hälfte 61 analog in die obere Halbschale 51 fixiert ist, sind die genannten Steckverbindungen 63, 64 betriebssicher verbunden, sobald die Halbschalen 51, 52 des Sensorkopfes 5 verschlossen werden.

Im weiteren werden die Halterungsnippel 401 und die innere Berandung der Durchströmungskanäle 201 durch eine nanotechnische Beschichtungstechnik und Oberflächentechnik veredelt. Damit wird das Eindringen von Fremdkörpern und Feuchtigkeit und das Festsetzen von Ablagerungen vermieden.

Die in den Zeichnungen verwendeten Bezugszeichen haben folgende Bedeutung:
- 1: Meßsondentragkörper mit
- 11: bis 16 Strömungsfühler
- 201/202: Durchströmungskanäle
- 301/302: Öffnungen
- 401/402: Halterungsnippel
- 5: Sensorkopf mit
- 51: Sensorkopf obere Halbschale
- 52: Sensorkopf untere Halbschale
- 60: Apparate-Einheit mit
- 61: Apparate-Einheit obere Hälfte
- 62: Apparate-Einheit untere Hälfte
- 63, 64: veredelte Steckverbindung
- 71: Neigungssensor
- 72: Distanzsensor

## Patentansprüche

1. Thermisches Anemometer bestehend aus einer Anordnung für Strömungsfühler und Durchströmungskanälen für ein thermisches Anemometer auf Durchflußbasis in einem als Hohlkörper ausgebildeten Sensorkopf(5), wobei die Signale der Strömungsfühler(11) in einer Auswerte- und Anzeigeeinrichtung verarbeitbar sind, wobei:
einem Meßsondentragkörper(1), der zur Aufnahme von mindestens sechs Strömungsfühlern(11-16) dient, wobei jeder Strömungsfühler (11-16) jeweils von einem zusammengehörenden Paar von Durchströmungskänalen (201-212) durchströmt ist;
diese zusammengehörenden Durchströmungskanäle (201-212) mit Öffnungen (301-312) des Sensorkopfes(5) verbunden sind, die zentrisch gegenüberliegend auf dem Sensorkopf angeordnet sind, und einen Durchfluß des zu messenden Fluids durch den zugeordneten Strömungsfühler (11-16) ermöglichen;
alle Öffnungen (301-312) räumlich gleichmäßig über den Sensorkopf angeordnet sind;
die Durchströmungskanäle (201-212) formstabil, verwindungssteif sind und mit dem formstabilen, verwindungssteifen Meßsondentragkörper(1) eine formstabile, verwindungssteife Apparate-Einheit(60) bilden, **dadurch gekennzeichnet, dass**
die Durchströmungskanäle (201-212) an ihrem äußeren axialen Ende an die Öffnungen (301-312) des Sensorkopfes anliegen und durch je einen Halterungsnippel (401-412) mit dem Sensorkopf festsitzend, lösbar verbunden sind, und dass,
die Halterungsnippel (401-412) von der Außenseite des Sensorkopfes durch die Öffnungen (301-312) greifen und mit den Durchströmungskanälen (201-212) eine festsitzende, lösbare Verbindung eingehen, und dass das Anemometer dafür ausgebildet ist,
mittels rechentechnischer Verfahren eine dreidimensionale zeitabhängige Messung von Betrag und Richtung der Geschwindigkeit und insbesondere des Turbulenzgrades einer Strömung, also dem Quotient aus der Varianz und dem Mittelwert der Strömungsgeschwindigkeit mit einer oberen Grenzfrequenz der Strömungsfühler (11-16), welche die Frequenz der auftretenden Geschwindigkeitsschwankungen vielfach übersteigt, durchzuführen und dass die Anordnung im weiteren über Vorrichtungen zur Lagebestimmung im Raum verfügt.

2. Thermisches Anemometer nach Anspruch 1 **dadurch gekennzeichnet, daß** die Apparate-Einheit(60) aus zwei Hälften gestaltet ist, wobei die obere Hälfte der Apparate-Einheit(61) in die obere Halbkugelschale des Sensorkopfes, die untere Hälfte in die untere Halbkugelschale des Sensorkopfes(62) lösbar festsitzend angebracht ist, und eine Apparate-Einheit-Hälfte(61) mit der anderen Apparate-Einheit-Hälfte(62) abdichtend, formschlüssig durch eine Steckverbindung(63,64) verbunden ist, sobald die Halbkugelschalen(51,52) des Sensorkopfes geschlossen sind.

3. Thermisches Anemometer nach einem oder mehreren der genannten Ansprüche **dadurch gekennzeichnet, daß** die Halterungsnippel(401) mit Reduzierungsvorrichtungen, wie Blenden, Düsen, zur Veränderung des Meßbereichs versehen sind, und die Art der verwendeten Halterungsnippel(401) in die Steuereinheit eingespeist und ein entsprechend für diese Halterungsnippel(401) konfigurierter Berechnungsalgorithmus zum Umwandeln der Signale der Strömungsfühler(11) in Strömungsmeßwerte verwendet wird.

4. Thermisches Anemometer nach einem oder mehreren der genannten Ansprüche **dadurch gekennzeichnet, daß** es einen Neigungssensor(71) zur Lagebestimmung der Anordnung im Raum aufweist.

5. Thermisches Anemometer nach einem oder mehreren der genannten Ansprüche **dadurch gekennzeichnet, daß** ein Distanzsensor(72) zur Lagebestimmung im Raum vorhanden ist.

6. Thermisches Anemometer nach einem oder mehreren der genannten Ansprüche **dadurch gekennzeichnet, daß** die Halterungsnippel(401) und/oder die innere Bewandung der Durchströmungskanäle (201) durch eine nanotechnische Beschichtung in der Oberfläche veredelt sind.

7. Thermisches Anemometer nach einem oder mehreren der genannten Ansprüche **dadurch gekennzeichnet, daß** die Anordnung mit weiteren Sensoren zur Bestimmung der Stoffwerte ausgestattet ist.

8. Thermisches Anemometer nach einem oder mehreren der genannten Ansprüche **dadurch gekennzeichnet, daß** die Anordnung Constant Current Anemometer (CCA) oder Constant-Temperature-Anemometer (CTA) einschließt.

## Claims

1. A thermal anemometer comprising an arrangement for flow sensors and flow ducts used for a flow-based thermal anemometer in a sensor head (5) which is formed as a hollow body, it being possible to process signals of the flow sensors (11) in an evaluation and display device, wherein:
a measuring probe body (1) serves to accommodate at least six flow sensors (11-16), the flow through each flow sensor (11-16) being by way of a pair of flow ducts (201-212) in each case;
these pairs of flow ducts (201-212) are connected with openings (301-312) in the sensor head (5) which are arranged centrically opposite each other on the sensor head (5) and permit the fluid to be measured to flow through the associated flow sensors (11-16);
all openings (301-312) are spaced evenly on the sensor head (5);
the flow ducts (201-212) are dimensionally stable and torsionally rigid and together with the dimensionally stable and torsionally rigid measuring probe body (1) form a dimensionally stable and torsionally rigid assembled unit (60), **characterised in that**
the flow ducts (201-212) come into contact with the openings (301-312) of the sensor head at their outer axial ends and are each connected with the sensor head in a tight and detachable manner by way of a retaining nipple (401-412), and that
the retaining nipples (401-412) engage from the outside of the sensor head via the openings (301-312) and form a tight, detachable connection with the flow ducts (201-212), and that the anemometer is arranged for
three-dimensional, time-dependent measurement of the amount and direction of the velocity and in particular the degree of turbulence of a flow, i.e. the quotient of the variance and the mean of the flow velocity, to be performed using computational means with the maximum operating frequency of the flow sensors (11-16) exceeding the frequency of the occurring velocity fluctuations by multiple factors, and that the arrangement furthermore possesses means for position determination in space.

2. A thermal anemometer according to claim 1, **characterised in that** the assembled unit (60) is formed from two halves, the upper half of the assembled unit (61) being accommodated in a tight and detachable manner in an upper semi-spherical shell of the sensor head and the lower half in the lower semi-spherical shell of the sensor head (62), and one assembled unit half (61) being connected to form a sealed form fit with the other assembled unit half (62) by way of a push-on connection (63,64) as soon as the semi-spherical shells (51,52) of the sensor head are closed.

3. A thermal anemometer according to one or several of the said claims, **characterised in that** the retaining nipples (401) are provided with means of reduction such as orifices or nozzles to alter the measuring range and the type of the retaining nipples (401) used is input into the control unit and a calculation algorithm configured accordingly for these retaining nipples (401) is used to convert the signals of the flow sensors (11) into flow measurement values.

4. A thermal anemometer according to one or several of the said claims, **characterised in that** it possesses an inclination sensor (71) to determine the position of the arrangement in space.

5. A thermal anemometer according to one or several of the said claims, **characterised in that** a distance sensor (72) is provided to determine the position of the arrangement in space.

6. A thermal anemometer according to one or several of the said claims, **characterised in that** the retaining nipples (401) and/or the inner walls of the flow ducts (201) are refined by way of nanotechnical coating of their surface.

7. A thermal anemometer according to one or several of the said claims, **characterised in that** the arrangement is fitted with further sensors to determine property data.

8. A thermal anemometer according to one or several of the said claims, **characterised in that** the arrangement includes constant-current anemometers (CCA) or constant-temperature anemometers (CTA).

## Revendications

1. Anémomètre thermique composé d'une installation pour capteurs de courant et canaux d'écoulement pour un anémomètre thermique basé sur le débit dans une tête de capteur (5) réalisée comme corps creux, les signaux des capteurs de courant (11) pouvant être traités dans un dispositif d'évaluation et d'affichage :
un corps de sonde de mesure (1) sert de support pour au moins six capteurs de courant (11-16), chaque capteur de courant (11-16) étant traversé par une paire de canaux d'écoulement associés (201-212) ;
ces canaux d'écoulement associés (201-212) sont reliés aux orifices (301-312) de la tête de capteur (5), qui sont disposés de manière centrée à l'opposé sur la tête de capteur (5), pour permettre l'écoulement du fluide mesuré à travers les capteurs de courant (11-16) correspondants ;
tous les orifices (301-312) sont répartis de manière régulière sur la tête de capteur (5) ;
les canaux d'écoulement (201-212) sont résistants à la déformation et à la torsion et forment un bloc d'appareillage (60) résistant à la déformation et à la torsion avec le corps de sonde de mesure (1) résistant à la déformation et à la torsion, **caractérisé en ce que**
les canaux d'écoulement (201-212) sont plaqués à leur extrémité axiale contre les orifices (301-312) de la tête de capteur et sont fixés chacun à la tête de capteur par un raccord amovible indesserrable (401-412), et que
les raccords (401-412) traversent les orifices (301-312) depuis la face extérieure de la tête de capteur et forment un assemblage amovible indesserrable avec les canaux d'écoulement (201-212), et que l'anémomètre est conçu de manière à effectuer, au moyen de procédés informatiques, une mesure tridimensionnelle de la grandeur et du sens de la vitesse en fonction du temps, et en particulier du niveau de turbulence d'un courant, autrement dit le quotient de la variance et de la valeur moyenne de la vitesse d'écoulement avec une fréquence limite supérieure des capteurs de courant (11-16), qui dépasse de plusieurs fois les fluctuations de vitesse qui se produisent, et que l'installation est équipée de dispositifs supplémentaires permettant de déterminer la position dans l'espace.

2. Anémomètre thermique selon la revendication 1, **caractérisé en ce que** le bloc d'appareillage (60) est composé de deux moitiés, la moitié supérieure du bloc d'appareillage (61) étant installée dans la coque hémisphérique supérieure de la tête de capteur et la moitié inférieure (62) dans la coque hémisphérique inférieure de la tête de capteur par assemblage amovible indesserrable, et qu'une moitié du bloc d'appareillage (61) est reliée à l'autre moitié du bloc d'appareillage (62) par assemblage à emboîtement (63,64) étanche dès que les coques hémisphériques (51,52) de la tête de capteur sont fermées.

3. Anémomètre thermique selon l'une ou plusieurs des revendications précédentes, **caractérisé en ce que** les raccords (401) sont munis d'éléments réducteurs telles que des orifices de jaugeage, buses, etc. pour modifier la zone de mesure, que le type de raccords (401) utilisés est indiqué à l'unité de commande et qu'un algorithme de calcul configuré en fonction de ces raccords (401) est utilisé pour convertir les signaux des capteurs de courant (11) en valeurs de mesure de courant.

4. Anémomètre thermique selon l'une ou plusieurs des revendications précédentes, **caractérisé en ce qu'**il est équipé d'un capteur d'inclinaison (71) pour déterminer la position de l'installation dans l'espace.

5. Anémomètre thermique selon l'une ou plusieurs des revendications précédentes, **caractérisé en ce qu'**il est équipé d'un capteur de distance (72) pour déterminer la position dans l'espace.

6. Anémomètre thermique selon l'une ou plusieurs des revendications précédentes, **caractérisé en ce que** les raccords (401) et/ou la face intérieure des canaux d'écoulement (201) possèdent un revêtement de finition à nanostructure.

7. Anémomètre thermique selon l'une ou plusieurs des revendications précédentes, **caractérisé en ce que** l'installation est équipée de capteurs supplémentaires pour déterminer les valeurs des substances.

8. Anémomètre thermique selon l'une ou plusieurs des revendications précédentes, **caractérisé en ce que** l'installation inclut des anémomètres CCA (Constant Current Anemometer) ou des anémomètres CTA (Constant Température Anemometer).
